# EUROPEAN PATENT SPECIFICATION

(11) **EP 2 134 008 B1**
(45) Date of publication and mention of the grant of the patent: **17.10.2012**
(21) Application number: 08290540.7
(22) Date of filing: 11.06.2008
(51) Int. Cl.: H04B 10/158, H04B 10/18, H04L 25/03

(54) **Half rate electrical equalizer for optical modulation formats with alternating polarization**
Halbrätiger elektrischer Entzerrer für optische Modulationsformate mit alternierender Polarisierung
Égaliseur électrique à demi-vitesse pour formats de modulation optique avec polarisation alternée

(43) Date of publication of application: 16.12.2009
(73) Proprietor: Alcatel Lucent, 75007 Paris (FR)
(72) Inventor: Franz, Bernd, 74336 Brackenheim (DE)
(74) Representative: Wetzel, Emmanuelle

(56) References cited:
- EP-A- 1 845 641
- EP-A- 1 860 802
- US-A1- 2004 213 586
- US-B1- 7 106 099

## Description

The invention relates to optical communications, in particular to an electrical equalizer for equalizing an electrical signal derived from a received optical signal in an alternating polarization (Apol) modulation format.

For improving the robustness of ultra-high-speed fiber-optical transmission systems, such as transmission systems with one or more 40, 43 or 100 Gb/s channels, against nonlinear effects of the fiber (e.g. intra-channel four wave mixing and intra-channel cross-phase modulation), Apol modulation formats, such as Apol-DPSK (differential phase shift keying) or Apol-RZ-DPSK (retum-to-zero differential phase shifting keying) with alternating polarization for adjacent symbols may be used. In such Apol modulation format, two consecutive data symbols are transmitted in different polarizations (typically orthogonal polarizations).

In conventional DPSK or RZ-DPSK modulation schemes, the receiver determines the change of the phase state of the optical carrier between two consecutive bit intervals. E.g. two consecutive bit intervals encode a logical "1" in case of no phase change, and two consecutive bit intervals encode a logical "0" in case of a phase change of π (or vice versa). The phase change is measured by a delay line interferometer (DLI), also called DPSK demodulator. In such DLI, the optical signal is split into two beams, with one bit being delayed by one bit interval. The two beams are then superimposed, thereby interfering in dependency of the phase change constructively or destructively. After optical-electrical conversion, such two-state amplitude modulated signal is then detected by the receiver.

Typically, in case of Apol-DPSK or Apol-RZ-DPSK modulation formats, the receiver monitors the change of the phase state between two consecutive odd (even) bit intervals transmitted in the first (second) polarization. Thus, a DLI with a two bit delay is used.

When transmitting a high-data-rate optical signal via an optical fiber, the signal is distorted due to PMD (polarization mode dispersion). The optical fiber has two orthogonal principle axes (a fast axis and a slow axis), which have a different travelling speed. Orthogonal polarization components of the signal aligned with the principle axes propagate with different speeds. Thus, two polarization components of a signal separate along the fiber, thereby spreading the signal pulses and causing signal interference between subsequent symbols (intersymbol interference - ISI). The delay between polarization components is characterized by the differential group delay (DGD) proportional to the square root of travel distance.

Apol modulation formats (e.g. Apol-RZ-DPSK) suffer more from PMD than modulation formats with only one polarization (e.g. RZ-DPSK). Modulation formats with a single polarization suffer from PMD when the signal polarization is not aligned with one of the axes of the fiber, i.e. γ ≠ {0;1), e.g. γ = 0.5. The parameter γ indicates the alignment of the signal polarization to the fast and slow axes (γ = 0 means alignment with one axis, γ = 1 means alignment with the other axis, γ = 0.5 means a misalignment of 45° between the signal polarization and one of the orthogonal axes). In case the single signal polarization is aligned with one of the two axes of the fiber, no PMD penalty occurs since only one axis is used. However, for Apol modulation formats in case the two signal polarizations are aligned with the axes of the fiber, severe PMD penalty occurs. This is caused by the fact that the propagation delays for adjacent symbols (transmitted via different polarizations) are different. Thus, the time delay between a given optical even symbol and a subsequent optical odd symbol is reduced proportionally to the DGD, whereas the time delay between an optical odd symbol and a subsequent optical even symbol is increased proportionally to the DGD. This effect negatively affects the signal decision in the receiver. In an eye diagram, the eye associated with the even pulses and the eye associated with the odd pulses approach to each other. In EP 1 860 802 A1 the alternate polarizations of an Apol-(RZ)-DPSK format in view of the orthogonal axis of the fiber (see Fig. 3c in EP 1 860 802 A1) and the impact of the angle relationship on the optical signal (see e.g. Fig. 2b and Fig. 3b in EP 1 860 802 A1) are discussed.

For overcoming PMD penalty in Apol modulation formats, electrical signal equalization may be used at the receiver. Preferably, even and the odd optical symbols should equalized differently due to their different travel speed (in case of γ ≠ 0.5).

EP 1 860 802 A1 describes an Apol-RZ-DPQSK receiver, wherein the received signal is fed to two feed-forward-equalizers (FFE) in parallel. Each of the FFEs works at full bitrate of the received signal. However, only every second (even or odd) pulse is effectively equalized by each FFE (since only every second output signal of each FFE is used signal decision). Due to the use of two FFEs working at full bitrate, the power dissipation and circuit complexity is high. Moreover, when using a very high bitrate (e.g. 40/43 Gbit/s or even 100 Gb/s), state-of-the-art CMOS (complementary metal-oxide-semiconductor) technologies cannot handle the high-speed signal processing. Rather, expensive high-speed IC technologies with a lower level of integration capabilities have to be used (e.g. GaAs HEMT or SiGe HBT).

EP 1 860 802 A1 shows in Fig. 8 two cross-coupled DFEs (DFE = decision feedback equalizer), which are clocked with half the data rate frequency. The output of the first DFE is cross-connected with an input of the second DFE via a first delay element and a first weighting means. Likewise, the output of the second DFE is cross-connected with the input of the first DFE via a second delay element and a second weighting means.

EP 1 845 641 A1 discloses a receiver for an Apol format, with the receiver using a Viterbi equalizer. The equalizer has a first and a second channel estimation unit. Moreover, a switch is provided in between the input to the Viterbi core and the channel estimation units for selecting either the first or the second one in alternating order. The signal at the input to the receiver is an Apol signal, the polarization state of which is switched between two possible states at a frequency corresponding to the bit-rate. The switch is driven with a corresponding clock signal at the half bit rate, thus dividing all the received samples into odd and even samples and providing them to the corresponding channel estimation unit in alternating order.

US 7,106,099 B1 discloses a decision feedback equalization technique suitable for use in a serializer-deserializer receiver in an integrated circuit (IC). The IC has a summing node coupled to a return-to-zero (RTZ) data latch register. The RTZ data latch register has a first ("even") series of RTZ data latches and a second ("odd") series of RTZ data latches. A first even tap is coupled to the first even RTZ data latch and provides a feedback signal to the summing node on a first portion of a local clock cycle. A first odd tap is coupled to the first odd RTZ data latch and provides an odd feedback signal to the summing node on a second portion of the local clock cycle. The data latches in the data latch register use a high-speed clock. The high-speed clock is a local clock that runs at half the rate of the incoming data, and the decision feedback equalization system is referred to as a half-rate clock system.

US 2004/0213586 A1 discloses a decision feedback equalizer (DFE). The DFE is capable of accepting electrical input data signals based upon optical data signals. The DFE compares the incoming data to reference voltages denoting threshold detection points for data analysis. Dependent upon clock signaling and the prior data bit value, the DFE will output the data signal component at either a first data output line or a second data output line. The configuration of the DFE is such that it facilitates processing of a data pulse stream by splitting the incoming signal into odd and even clock valued bits. As such, corresponding odd and even clock value actuated detection subcircuits are operating at only half of the transmission system data rate.

It is an object of the present invention to provide an electrical equalizer for use in an Apol receiver, in particular for an APOL-RZ-DPSK or an APOL-DPSK receiver, which overcomes said problems of the equalizer in the prior art receiver. It is further an object of the present invention to provide a corresponding optical receiver comprising an equalizer and a corresponding method for equalization. These objects are achieved by the equalizer, the receiver and the method for equalization according to the independent claims.

The invention is defined by the independent claims.

A first aspect of the invention relates to an electrical equalizer for equalizing an amplitude-modulated electrical signal derived from a received optical signal in an Apol modulation format. Preferably, the equalizer is for an Apol-RZ-DPSK or an Apol-DPSK receiver. In case of Apol-DPSK or Apol-RZ-DPSK, such amplitude-modulated electrical signal may be derived from the optical signal by a delay line interferometer with two bit delay and a subsequent optical-to-electrical converter.

Such electrical signal comprises a sequence of symbols subdivided in alternating even and odd symbols (i.e. a sequence of an even symbol, an odd symbol, an even symbol, etc.). In case of a binary symbol with two states, each symbol is a bit (e.g. in case of a binary RZ-DPSK or DPSK modulation).

For example, the even symbols of the electrical signal (e.g. derived by comparing the phase difference between symbol intervals in the first polarization, with a symbol interval in the second polarization in between) are associated with a first polarization, whereas the odd symbols of the electrical signal (e.g. derived by comparing the phase difference between two symbol intervals in a second polarization, with a symbol interval in the first polarization in between) are associated with a second polarization.

The distorted data is distributed to sampling means (e.g. sample-and-hold circuits), where adjacent symbols are sampled in parallel, in particular at the respective optimum eye openings.

Preferably, the equalizer comprises two sampling means: first sampling means (a first sampling circuit) for sampling the even symbols of the electrical signal, and second sampling means (a second sampling circuit) for sampling the odd symbols of the electrical signal.

By providing two sampling means in parallel (one for the odd symbols and one for the even symbols), the sampling rate of each of the sampling means can be selected to be half of the (overall) symbol rate of the electrical signal.

The equalizer is further configured to weightedly combine samples of adjacent symbols of the electrical signal. By such combination of adjacent symbols, the ISI can be reduced.

The equalizer is advantageously capable of individual equalization of the odd symbols and individual equalization of the even symbols. The equalizer comprises combining means for weightedly combining a first group of samples of adjacent symbols of the electrical signal (one combination per even symbol), thereby generating an equalized stream of even symbols, and for weightedly combining a second group of samples of adjacent symbols of the electrical signal (one combination per odd symbol), thereby generating an equalized stream of odd symbols. The weights for the first group of samples can be preferably selected to be different from the weights for the second group of samples.

The equalizer provides the advantages that all circuit elements of the equalizer downstream of the first and second sampling means can operate at half of the symbol rate or lower (when using demultiplexing stages). Thus, a 100 Gb/s data signal can be processed after the sampling means at 50 Gb/s. For signal processing (after sampling) two processing paths can be used, which each handle serial data at half of the symbol rate. Due to the half rate operation, the power consumption is drastically reduced compared to the prior art full rate operation (please note that the power consumption of high-speed electronic circuit blocks like delay elements, multipliers and adders increases disproportionately high with increasing data rate). Moreover, due to the reduced speed requirements, CMOS can be used for implementation (currently at least up to a bitrate of 43 Gb/s; with shrinking dimensions CMOS will also handle a bitrate of 100 Gb/s or above in the future).

The equalizer can be used for optical data transmission in general, in particular for fiber-optical applications with 40, 43 Gbps or 100 Gbps data rates and submarine applications.

Moreover, the circuit complexity is reduced compared to the prior art approach. Since in the prior art approach the received signal is processed at full rate in both FFEs and thus more data is processed, more delay elements, multipliers and adders are needed for signal processing.

It should be noted that the first group of samples of adjacent symbols comprise at least one odd symbol and at least one even symbol. Thus, for processing the first group of samples the combining means process samples from both sampling means. Analogously, since the second group of samples of adjacent symbols comprise at least one odd symbol and at least one even symbol, the combining means process samples from both sampling means for processing the second group of samples. Thus, the samples at the output of the first sampling means and the samples at the output of the second sampling means are not strictly separately processed. Rather, samples from both paths are combined (both for weightedly combining the first group of samples and for weightedly combining the second group of samples).

The inventive equalizer, in particular when used for optical Apol-RZ-DPSK transmission, can improve the optical link performance by increasing the link length and can decrease the costs of such link (e.g. PMD from a bad fiber can be compensated).

Preferably, the first sampling means are a first sample-and-hold circuit and the second sampling means are a second sample-and-hold circuit. Alternatively, the first sampling means may form a first analog-to-digital converter (ADC) and the first sampling means may form a second analog-to-digital converter (ADC). In case of using ADCs, signal equalization is performed in the digital domain, whereas when using only sample-and-hold circuits (without the remaining parts of an ADC), signal equalization is performed in the analog domain (analog equalizer).

According to a preferred embodiment, phase aligning means are provided. Since the sampling instants for the first and second sample-and-hold circuits are different, the output signals of the two sample-and-hold circuits are not phase aligned. The signal edge at the output of the first sample-and-hold circuit does not coincide with the signal edge at the output of the second sample-and-hold circuit. Therefore, preferably phase aligning means are provided for aligning the phase of the output signal of the first sample-and-hold circuit with the phase of the output signal of second sample-and-hold circuit.

Preferably, a second pair of sample-and-hold circuits is used for aligning the sampled signals so that the sampled signals are in phase.

According to a preferred embodiment, the phase aligning means comprise a third sample-and-hold circuit, the third sample-and-hold circuit receiving the output signal of the first sample-and-hold circuit. Moreover, the phase aligning means comprise a fourth sample-and-hold circuit, the fourth sample-and-hold circuit receiving the output signal of the second sample-and-hold circuit. The third and fourth sample-and-hold circuits are configured to sample at the same time instance, e.g. the sampling signal for the third sample-and-hold circuit is phase-aligned to the sampling signal for the fourth sample-and-hold circuit.

The combining means may be configured to weightedly combine a sample of an even symbol and two samples of two odd symbols adjacent to the even symbol. Further, the combining means may be configured to weightedly combine a sample of an odd symbol and two samples of two even symbols adjacent to the odd symbol. Thus, in the minimal configuration the combining means form two 3-tap FFEs working each at half rate. It can be shown that the performance of such half rate configuration with two 3-tap FFEs is roughly comparable to the performance of a prior art full rate configuration with two (fractional-spaced) 5-tap FFEs in parallel. It should be noted that the combining means may be also configured to combine additional samples adjacent to said samples (e.g. an additional sample directly preceding said samples and an additional sample directly following said samples in case of two 5-tap FFEs).

Preferably, the sampling phases are adjusted in such a way that the sampling means sample adjacent bits of the electrical signal in the maximum eye openings. This provides maximum signal level and thus reduces the possibility of wrong bit decision (in the decision circuit downstream of the equalizer).

For adapting the equalizer an LMS (least mean square) algorithm or an algorithm using an eye monitor (e.g. which tries to maximize the eye opening) or based on counting errors (e.g. FEC error count) for the feedback may be used.

The algorithm may be used for controlling the sampling phases of the two sampling means and/or for controlling the weights in the combining means.

The equalizer may comprise controlling means for controlling the weights of the combining means and/or for controlling the sampling phases of the first and second sampling means, wherein the controlling means are configured to carry out an LMS algorithm, an algorithm based on an eye monitor or an algorithm based on counting errors.

Preferably, the equalizer is configured such that the sampling phase of the first sampling means is independently controllable from the sampling phase of the second sampling means. This is beneficial for Apol modulation formats, since in Apol modulation formats the propagation delay of the pulses may vary in dependency of the polarization of the respective pulse. Independently control of both sampling phases allows to sample the even pulses in the maximum eye opening and to sample the odd pulses in the maximum eye opening even in case the distance between the maximum eye openings varies.

It should be noted that basically the above mentioned embodiments of the invention can be arbitrarily combined.

A second aspect of the invention relates to a receiver for receiving an optical signal in an alternating polarization modulation format. The electrical signal comprising a sequence of symbols subdivided in alternating even and odd symbols as discussed before. The receiver comprises means for generating an amplitude-modulated electrical signal from the received optical signal (e.g. a DLI with two bit delay and optical-to-electrical converter means in an Apol-RZ-DPSK or Apol-DPSK receiver). Further, the receiver comprises an equalizer as discussed above. The above remarks related to the first aspect of the invention are also applicable to the second aspect of the invention.

Preferably, the receiver is Apol-RZ-DPSK or Apol-DPSK receiver.

A third aspect of the invention relates to method for equalizing an electrical signal derived from a received optical signal in an alternating polarization modulation format. The electrical signal comprises a sequence of symbols subdivided in alternating even and odd symbols as discussed before. The method comprises the step of sampling - at first sampling means - even symbols of the electrical signal with a sampling rate that is half of the symbol rate of the electrical signal. At second sampling means, odd symbols of the electrical signal are sampled with a sampling rate that is half of the symbol rate of the electrical signal. A first group of samples of adjacent symbols of the electrical signal is weightedly combining. Also, a second group of samples of adjacent symbols of the electrical signal is weightedly combined. The above remarks related to the first aspect of the invention are also applicable to the third aspect of the invention.

The invention is explained below in an exemplary manner with reference to the accompanying drawings, wherein
- Fig. 1a: illustrates an eye diagram of an distorted electrical signal derived from an optical Apol-RZ-DPSK modulated signal after DPSK demodulation, with DGD = 10 ps and γ = 0.5 (45° angle misalignment between the orthogonal polarization components of the optical signal and the orthogonal axes of the fiber);
- Fig. 1b: illustrates an eye diagram of an distorted electrical signal derived from an optical Apol-RZ-DPSK modulated signal after DPSK demodulation, with DGD = 10 ps and γ = 0 (alignment between the orthogonal polarization components and the axes of the fiber);
- Fig. 2: illustrates a block diagram block diagram of an embodiment of the inventive equalizer; and
- Fig. 3: illustrates the simulated OSNR (optical signal-to-noise ratio) at an BER (bit error rate) of 10⁻³ in dependency of the DGD.

In case of Apol-RZ-DPSK (and DPSK), the receiver determines the change of the phase state between two consecutive bit intervals transmitted with the same polarization. Thus, the receiver determines the phase change between the first and the third bit interval, the phase change between the second and the fourth bit interval, etc. For determining phase changes and converting the phase changes into an intensity-keyed signal, a delay line interferometer (DLI) may be used. Since in case of APOL-RZ-DPSK the receiver monitors the change of the phase state between a bit interval and a next but one bit interval, a DLI with two bit delay is used. The output signal of the DLI (which may be a single-ended signal or a differential signal if the DLI has a differential output) is optical-to-electrical converted (e.g. by one or two photo-detectors). The Apol-(RZ)-DPSK format and its DPSK-demodulation (in particular by a DLI with two bit delay) is described in EP 1 860 802 A1 (see e.g. Figs. 13a and 13b in EP 1860 802 A1). This disclosure of EP 1 860 802 A1 is hereby incorporated by reference.

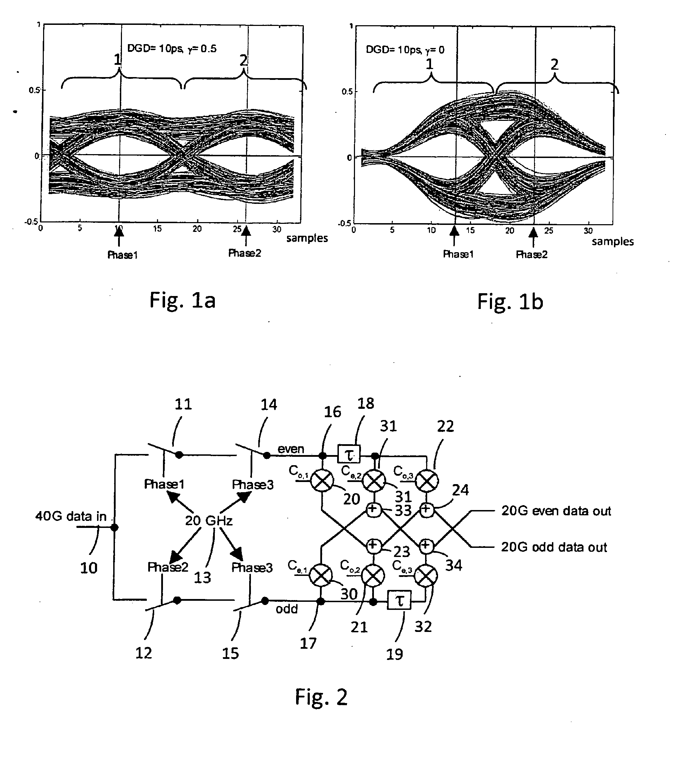

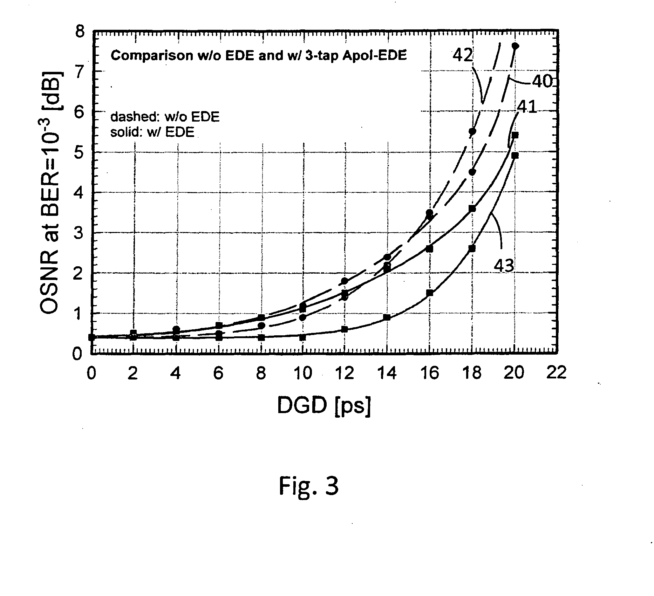

Fig. 1a illustrates an eye diagram of a distorted amplitude-modulated (differential) electrical signal derived from a received optical Apol-RZ-DPSK signal after DPSK demodulation with a DLI having a two bit delay. The eye diagram in Fig. 1a is obtained with DGD = 10 ps and γ = 0.5. Since γ is set to 0.5, there is a 45° angle misalignment between alternating polarizations of the transmitted signal and the orthogonal axes of the fiber. Thus, each polarization component of the transmitted signal travels along the fast axis and the slow axis with same energy. Since each polarization component of the transmitted signal is affected in the same way by PMD, the eye of the even bits 1 and the eye of the odd bits 2 in Fig. 1a have the same shape. Due to the DGD of 10 ps, the pulses of both eyes are spread and jitter is introduced. The distortion of modulated Apol-(RZ)-DPSK by PMD in case of γ = 0.5 is described in detail in EP 1 860 802 A1 (see e.g. Figs. 3b in EP 1 860 802 A1). This disclosure of EP 1 860 802 A1 is hereby incorporated by reference.

In case of RZ-DPSK transmission (i.e. without alternating polarization) with DGD = 10 ps and γ = 0.5 (45° angle misalignment between the single signal polarization and the orthogonal axes of the fiber), the eye diagram would look identical.

"Phase 1" and "Phase 2" as marked in Fig. 1a (and Fig. 1b) will be discussed later.

Fig. 1b illustrates the eye diagram of the distorted differential electrical signal in case of γ = 0 (still with DGD = 10 ps). Thus, the two orthogonal polarizations of the alternatingly polarized pulses of the transmitted Apol-RZ-DPSK signal are aligned to the axes of the fiber. Fig. 1b shows that the eye associated with the even bits 1 and the eye associated with the odd bits 2 converge. This is caused by the fact that the propagation delays for adjacent bits (transmitted via different polarizations) are different. Thus, the time delay between a given even bit 1 and a subsequent odd bit 2 is reduced proportionally to the DGD, whereas the time delay between an odd bit 2 and a subsequent even bit 1 is increased proportionally to the DGD. The distortion of modulated Apol-(RZ)-DPSK by PMD in case of γ = 0 is described in detail in EP 1 860 802 A1 (see e.g. Figs. 2b in EP 1 860 802 A1). This disclosure of EP 1 860 802 A1 is hereby incorporated by reference. This effect is reduced when increasing γ from 0 (or reducing γ from 1) and is completely suppressed in case of γ = 0.5.

In contrast, in case of conventional RZ-DPSK transmission (i.e. without alternating polarization) with DGD = 10 ps and γ = 0 or γ = 1 (alignment between the single signal polarization and one of the orthogonal axes of the fiber), the signal would be undistorted since only one axis of the fiber is used for transmission.

For this reason, Apol-RZ-DPSK suffers more from PMD than RZ-DPSK with only one polarization.

Therefore, there is a need for signal equalization in case of Apol-RZ-DPSK. Fig. 2 shows a block diagram of an embodiment of the inventive equalizer. The analog half rate equalizer in Fig. 2 is intended for Apol-RZ-DPSK. However, the equalizer may be also used for other modulation formats, in particular for other Apol modulation formats such as Apol-DPSK, Apol-(RZ)-DQPSK and Apol-(RZ)-OOK (on-off keying).

The equalizer in Fig. 2 may be part of a receiver comprising a DLI and one or more photo-detectors as discussed above. At an input 10, the equalizer receives an electrical signal comprising a sequence of bits subdivided in alternating even and odd bits (see Figs. 1a and 1b). Here, the bitrate of the input signal is 40 Gbps (gigabit per second). Alternatively, the equalizer could be used for other bitrates such as 43 Gbps or 100 Gbps. The maximum bitrate of the equalizer is determined by the maximum operating speed of the high-speed circuit blocks in the equalizer. The maximum operating speed is mainly determined by the used IC-technology such as CMOS, SiGe HBT or GaAs HEMT. Preferably, the equalizer is realized in CMOS. The equalizer may be integrated (preferably, also in combination with other or all part of the receiver) on a single chip.

The equalizer comprises two parallel sample-and-hold circuits 11 and 12, the inputs of which are coupled to the input 10. The sample-and-hold circuits 11 and 12 are used for sampling two adjacent bits at half bitrate, in particular for sampling in the maximum eye openings. In case of two adjacent pulses in two adjacent bit intervals, one pulse is sampled by the sample-and-hold circuit 11, whereas the other pulse is sampled by the sample-and-hold circuit 12.

Thus, the sample-and-hold circuit 11 is used for sampling the even bits 1 in Figs. 1a and 1b with a sample rate of 20 Gsps (giga samples per second), whereas the sample-and-hold circuit 12 is used for sampling the odd bits 2 in Figs. 1a and 1b with a sample rate of 20 Gsps. The sampling rate of the sample-and-hold circuits 11, 12 is half of the bitrate of the electrical signal at the input 10.

Preferably, the sample-and-hold circuit 11 and 12 are realized as differential circuits which sample a differential signal from a differential output of a DLI. Preferably, also the circuit elements downstream of the sample-and-hold circuits 11, 12 are realized as differential circuits.

The sampling instant of the sample-and-hold circuit 11 is determined by the phase (see phase 1) of a clock signal 13 (having a frequency of half the bitrate, here: 20 GHz; may also include harmonics) at the control input of the sample-and-hold circuit 11. The sampling instant of the sample-and-hold circuit 12 is determined by the phase (see phase 2) of a 20 GHz clock signal 13 at the control input of the sample-and-hold circuit 12. E.g., each sample-and-hold circuit 11 and 12 may be configured to sample a signal at the rising edge (or alternatively at the falling edge) of the clock signal 13. For generating different phases of the clock signal 13, phase shifter can be used.

The equalizer in Fig. 2 allows controlling the sampling phase of the first sample-and-hold circuit 11 and the sampling phase of the second sample-and-hold circuit 12 independently from each other (i.e. the time difference between sampling an even bit and an odd bit may be adjusted to be different from the bit period, here: different from 25 ps). This is beneficial for Apol modulation formats, since in Apol modulation formats the center of the eye of the even bits 1 and the center of the eye of the odd bits 2 may be closer than one bit interval (see Fig. 1b).

For the sample-and-hold circuit 11 the phase of the clock signal 13 is adjusted such that the sample-and-hold circuit 11 samples the even bits 1 in the maximum eye opening as indicated in Figs. 1a and 1b (see "phase 1" in Figs. 1a and 1b indicating the sampling instant). If e.g. the sample-and-hold circuit 11 is configured to sample a signal at the rising edge of the clock signal, at "phase 1" in Figs. 1a and 1b the clock signal 13 is at the rising edge.

Analogously, for the sample-and-hold circuit 12 the phase of the clock signal 13 is adjusted such that the sample-and-hold circuit 12 samples the odd bits 2 in the maximum eye opening as indicated in Figs. 1a and 1b (see "phase 2" in Figs. 1a and 1b indicating the sampling instant).

When comparing Figs. 1a and 1b, it is evident that the sampling phase (see "phase 1") of the even bits 1 and the sampling phase (see "phase 2") of the odd bits 2 have to be adjusted to be closer in case of γ = 0. This is due to the fact that in case of γ = 0, the alternatingly polarized pulses approach to each other proportionally to the DGD.

Since the sampling rate of the sample-and-hold circuits is half of the bitrate of the input signal, all equalizer circuit blocks after the first sample-and-hold block (comprising the circuits 11 and 12) work at half bitrate, here: 20 Gbps. Thus, a 40 Gbps data signal can be processed at 20 Gbps.

The equalizer comprises a second pair of sample-and-hold circuits 14 and 15 which are used to align the sampled signals such that the samples are in phase. This means that the second pair of sample-and-hold circuits 14 and 15 cause that the edge of the sampled signal from the output of the sample-and-hold circuit 11 coincides with the edge of the sampled signal from the output of the sample-and-hold circuit 12. Thus, the sampling phase of the sample-and-hold circuits 14 and 15 is identical (see phase 3 in Fig. 2).

The following FFE (feed-forward-equalizer) reduces the ISI by combing samples of adjacent bits (or pulses) of the incoming data signal.

In the FFE the samples from the first sample-and-hold circuit 11 and the samples from the second sample-and-hold circuit 12 are not strictly separately processed. Rather, samples from both paths are combined for equalization.

The FFE is configured to weightedly combine (per 2 bit intervals of the 40 Gbps data) a sample of an even bit and two samples of two odd bits adjacent to the even bit (such combined signal forms the equalized half bitrate data stream of even bits). Further, the FFE is configured to weightedly combine (per 2 bit intervals of the 40 Gbps data) a sample of an odd bit and two samples of two even bits adjacent to the odd bit (such combined signal forms the equalized halfbitrate data stream of odd bits).

A first input node 16 of the FFE receives aligned samples of even bits from the sample-and-hold circuit 14. A second input node 17 of the FFE receives aligned samples of odd bits from the sample-and-hold circuit 15. The FFE further comprises a first delay element 18 having a delay of two bits (here: 50 ps), the input of which is connected to node 16. In addition, the FFE comprises a second delay element 19 having a delay of two bits (here: 50 ps), the input of which is connected to the node 17.

For generating a stream of equalized odd data bits, the FFE further comprises multipliers 20, 21, 22 and adders 23, 24. The multiplier 20 is connected to the input of the delay element 18 to multiply a sample from node 16 by weight or tap coefficient C_{o,1}. The multiplier 21 is connected to the input of the delay element 19 to multiply a sample from node 17 by tap coefficient C_{o,2}. The multiplier 22 is connected to the output of the delay element 18 to multiply a sample from the output of the delay element 18 by tap coefficient C_{o,3}. The adder 23 combines the weighted sample from multiplier 20 and the weighted sample from multiplier 21. The adder 24 combines the output signal of adder 23 and the weighted sample from multiplier 22. Thus, the signal at the output of this path corresponds to a weighted combination of a sample of an odd bit and two samples of two even bits adjacent to the odd bit. Typically, the weight C_{o,2} of the middle sample is much larger than the other weights C_{o,1}, C_{o,3} since most of the bit energy of a distorted bit pulse is located in the middle. The signal at the output of this path corresponds to a stream of equalized odd data bits. Here, the data stream of odd data bits has a bitrate of 20 Gbps.

For generating a stream of equalized even data bits, the FFE further comprises multipliers 30, 31, 32 and adders 33, 34. The multiplier 30 is connected to the input of the delay element 19 to multiply a sample from node 17 by tap coefficient C_{e,1}. The multiplier 31 is connected to the output of the delay element 18 to multiply a sample from the output of the delay element 18 by tap coefficient C_{e,2}. The multiplier 32 is connected to the output of the delay element 19 to multiply a sample from the output of the delay element 19 by tap coefficient C_{e,3}. The adder 33 combines the weighted sample from multiplier 30 and the weighted sample from multiplier 31. The adder 34 combines the output signal of adder 33 and the weighted sample from multiplier 32. Thus, the signal at the output of this path corresponds to a weighted combination of a sample of an even bit and two samples of two odd bits adjacent to the even bit. Typically, the weight C_{e,2} of the middle sample is much larger than the other weights C_{e,1}, C_{e,3} since most of the bit energy of a distorted bit pulse is located in the middle. The signal at the output of this path corresponds to a stream of equalized even data bits. Here, the data stream of even data bits has a bitrate of 20 Gbps.

For adapting the sampling phases and the weights of the FFE, an LMS algorithm or an algorithm using an eye monitor (e.g. which tries to maximize the eye opening) or based on counting errors (e.g. FEC error count) for the feedback may be used.

Instead of using 3 taps per each 20 Gbps output signal, the equalizer may comprise 2 taps or more than 3 taps (e.g. 5 taps or 7 taps). In case of using more than 3 taps further delay elements are needed for providing a larger number of samples. Thus, the delay elements in each of the even and odd paths in Fig. 2 may form a tapped delay line with more than 1 delay element per delay line.

Fig. 3 illustrates the performance of the equalizer in Fig. 2 in dependency of the DGD. Here, an OSNR (optical signal-to-noise ratio) at an BER (bit error rate) of 10⁻³ is shown in dependency of the DGD. The OSNR is a relative OSNR which resulted from simulation.

Fig. 3 shows four curves 40, 41, 42 and 43:
- the dashed curve 40 indicates the OSNR when using a receiver without an equalizer ("w/o EDE" - without electronic distortion equalizer) and γ = 0.5 (45° angle offset, see Fig. 1a);
- the solid curve 41 indicates the OSNR when using a receiver comprising the equalizer in Fig. 2 ("w/ EDE" - with electronic distortion equalizer) and γ = 0.5 (45° angle offset, see Fig. 1a);
- the dashed curve 42 indicates the OSNR when using a receiver without an equalizer and γ = 0 (0° angle offset, see Fig. 1b); and
- the solid curve 43 indicates the OSNR when using a receiver comprising the equalizer in Fig. 2 and γ = 0 (0° angle offset, see Fig 1b).

The curves 40 and 41 indicating the OSNR penalty in case of γ = 0.5 are simulated for Apol-RZ-DPSK modulation. The corresponding curves for conventional RZ-DPSK modulation in case of γ = 0.5 would be identical to the curves 40, 41 for Apol-RZ-DPSK modulation. This is due to the fact that in case of conventional RZ-DPSK modulation the single polarization signal (with 45° offset) is transmitted via both axes of the fiber in the same way as both polarizations (having each 45° offset) of the alternating polarization signal in case of Apol-RZ-DPSK.

The curves 42 (without equalizer) and 43 (with equalizer sampling even and odd bits differently, see Fig. 1b) indicate the OSNR penalty in case of γ = 0. In case of conventional RZ-DPSK modulation and γ = 0, no penalty would occur since the single polarization of the RZ-DPSK signal is transmitted only via one axis (fast or slow) of the fiber.

When comparing the curves 42 (γ = 0) and 40 (γ = 0.5), the OSNR penalty is roughly comparable in case of γ = 0 and γ = 0.5. As evident from curve 43 (γ = 0), when using the equalizer of Fig. 2 the OSNR penalty in case of γ = 0 is suppressed roughly up to a DGD of 12 ps (this corresponds to a PMD of 4 ps). Beginning from roughly 12 ps, the OSNR starts to become notable, below 12 ps the OSNR penalty is insignificant. This means that the PMD performance of such Apol-RZ-DPSK receiver with equalizer becomes comparable with the PMD performance of a RZ-DPSK receiver.

It can be shown that an equalizer with two separate full rate 5-tap FFEs (see EP 1 860 802 A1) has a similar performance. However, the equalizer in Fig. 2 implements the same level of equalization with a 2x 3-tap FFE. Thus, in comparison to the prior art approach, the technological requirements of the inventive equalizer are relaxed, less power is dissipated and/or a realization in CMOS for applications with 40 or 43 Gbps bitrate is possible.

## Claims

1. An electrical equalizer for equalizing an amplitude-modulated electrical signal derived from a received optical signal in an alternating polarization modulation format, the electrical signal comprising a sequence of symbols subdivided in alternating even (1) and odd (2) symbols, the equalizer comprising:
- first sampling means (11), the first sampling means for sampling the even symbols (1) of the electrical signal, with the sampling rate of the first sampling means (11) being half of the symbol rate of the electrical signal;
- second sampling means (12), the second sampling means for sampling the odd symbols (2) of the electrical signal, with the sampling rate of the second sampling means (12) being half of the symbol rate of the electrical signal; and
- combining means (18, 19, 20, 21, 22, 23, 24, 30, 31, 32, 33, 34) downstream of the first (11) and second (12) sampling means, the combining means for weightedly combining a first group of samples of adjacent symbols of the electrical signal and for weightedly combining a second group of samples of adjacent symbols of the electrical signal; wherein the combining means (18, 19, 20, 21, 22, 23, 24, 30, 31, 32, 33, 34) are configured to weightedly combine a sample of an even symbol (1) and two samples of two odd symbols (2) adjacent to the even symbol to generate an equalized stream of even symbols, and weightedly combine a sample of an odd symbol (2) and two samples of two even symbols (1) adjacent to the odd symbol, to generate an equalized stream of odd symbols.

2. The equalizer of claim 1, wherein each symbol (1, 2) is a bit.

3. The equalizer of claim 1, wherein the first sampling means are a first sample-and-hold circuit (11) and the second sampling means are a second sample-and-hold circuit (12).

4. The equalizer of claim 1, the equalizer further comprising:
phase aligning means (14, 15) for aligning the phase of the output signal of the first sampling means (11) with the phase of the output signal of the second sampling means (12).

5. The equalizer of claim 4, wherein the phase aligning means comprise:
- a sample-and-hold circuit (14), the sample-and-hold circuit receiving the output signal of the first sampling means (11); and
- a sample-and-hold circuit (15), the sample-and-hold circuit (15) receiving the output signal of the second sampling means (12),
wherein both sample-and-hold circuits (14, 15) are configured to sample at the same time instance.

6. The equalizer of claim 1, wherein the combining means comprise
- a first node (16) receiving samples of even symbols (1);
- a second node (17) receiving samples of odd symbols (2);
- a first delay element (18) having a delay of two symbols of the electrical signal, the input of which is connected to the first node (16):
- a second delay element (19) having a delay of two symbols of the electrical signal, the input of which is connected to the second node (17);
- means (20, 21, 22, 23, 24) for weightedly combining
- a sample from the first node (16),
- a sample from the second node (17), and
- a sample from the output of the first delay element (18);
and
- means (30, 31, 32, 33, 34) for weightedly combining
- a sample from the second node (17),
- a sample from the output of the first delay element (18), and
- a sample from the output of the second delay element (19).

7. The equalizer of claim 2, wherein
- the first sampling means (11) are configured to sample the even bits (1) essentially at the maximum eye opening, and
- the second sampling means (12) are configured to sample the odd bits (2) essentially at the maximum eye opening.

8. The equalizer of claim 1, further comprising:
- controlling means for controlling weights in the combining means and/or for controlling the sampling phases of the first (11) and second (12) sampling means, wherein the controlling means are configured to carry out an at least one of the following algorithms:
an LMS algorithm, an algorithm based on an eye monitor, and an algorithm based on counting errors.

9. The equalizer of claim 1, wherein the sampling phase of the first sampling means (11) is independently controllable from the sampling phase of the second sampling means (12).

10. The equalizer of claim 1, herein circuit elements (18, 19, 20, 21, 22, 23, 24, 30, 31, 32, 33, 34, 14, 15) of the equalizer downstream of the first (11) and second (12) sampling means operate at half of the symbol rate or lower.

11. The equalizer of claim 2, wherein the equalizer is for an Apol-RZ-DPSK receiver comprising a delay line interferometer with two bit delay.

12. A receiver for receiving an optical signal in an alternating polarization modulation format, the receiver comprising:
- means for generating an amplitude-modulated electrical signal from the received optical signal, the electrical signal comprising a sequence of symbols subdivided in alternating even and odd symbols; and
- an equalizer according to claim 1, the equalizer for equalizing the amplitude-modulated electrical signal.

13. The receiver of claim 12, wherein
- the receiver is an Apol-RZ-DPSK receiver, and
- the means for generating an amplitude-modulated electrical signal comprise:
- a delay line interferometer with two bit delay; and
- optical-to-electrical converter means.

14. A method for equalizing an electrical signal derived from a received optical signal in an alternating polarization modulation format, the electrical signal comprising a sequence of symbols subdivided in alternating even (1) and odd (2) symbols, the method comprising the steps of:
- at first sampling means (11), sampling even symbols (1) of the electrical signal with a sampling rate that is half of the symbol rate of the electrical signal;
- at second sampling means (12), sampling odd symbols (2) of the electrical signal with a sampling rate that is half of the symbol rate of the electrical signal;
- downstream of the first (11) and second (12) sampling means, weightedly combining a sample of an even symbol (1) and two samples of two odd symbols (2) adjacent to the even symbol to generate an equalized stream of even symbols; and
- downstream of the first (11) and second (12) sampling means, weightedly combine a sample of an odd symbol (2) and two samples of two even symbols (1) adjacent to the odd symbol, to generate an equalized stream of odd symbols.

## Patentansprüche

1. Elektrischer Entzerrer zum Entzerren eines von einem empfangenen optischen Signal in einem Wechselpolarisationsmodulationsformat abgeleiteten amplitudenmodulierten elektrischen Signals, wobei das elektrische Signal eine Folge von Symbolen, aufgeteilt in abwechselnd gerade (1) und ungerade (2) Symbole, umfasst, wobei der Entzerrer umfasst:
- Erste Abtastmittel (11), wobei die ersten Abtastmittel dazu bestimmt sind, die geraden Symbole (1) des elektrischen Signals abzutasten, wobei die Abtastrate der ersten Abtastmittel (11) die Hälfte der Symbolrate des elektrischen Signals beträgt;
- zweite Abtastmittel (12), wobei die zweiten Abtastmittel dazu bestimmt sind, die ungeraden Symbole (2) des elektrischen Signals abzutasten, wobei die Abtastrate der zweiten Abtastmittel (12) die Hälfte der Symbolrate des elektrischen Signals beträgt; und
- Kombinationsmittel (18, 19, 20, 21, 22, 23, 24, 30, 31, 32, 33, 34) stromabwärts der ersten (11) und zweiten (12) Abtastmittel, wobei die Kombinationsmittel dazu bestimmt sind, eine erste Gruppe von Abtastwerten benachbarter Symbole des elektrischen Signals gewichtet zu kombinieren, und eine zweite Gruppe von Abtastwerten benachbarter Symbole des elektrischen Signals gewichtet zu kombinieren; wobei die Kombinationsmittel (18, 19, 20, 21, 22, 23, 24, 30, 31, 32, 33, 34) dafür konfiguriert sind, einen Abtastwert eines geraden Symbols (1) und zwei Abtastwerte von zwei ungeraden Symbolen (2), die mit dem geraden Symbol benachbart sind, gewichtet zu kombinieren, um einen entzerrten Strom von geraden Symbolen zu erzeugen, und einen Abtastwert eines ungeraden Symbols (2) und zwei Abtastwerte von zwei geraden Symbolen (1), die mit dem ungeraden Symbol benachbart sind, gewichtet zu kombinieren, um einen entzerrten Strom von ungeraden Symbolen zu erzeugen.

2. Entzerrer nach Anspruch 1, wobei jedes Symbol (1, 2) ein Bit ist.

3. Entzerrer nach Anspruch 1, wobei die ersten Abtastmittel eine erste Sample-and-Hold-Schaltung (11) sind, und die zweiten Abtastmittel eine zweite Sample-and-Hold-Schaltung (12) sind.

4. Entzerrer nach Anspruch 1, wobei der Entzerrer weiterhin umfasst:
- Phasenabgleichmittel (14, 15) zum Abgleichen der Phase des Ausgangssignals der ersten Abtastmittel (11) mit der Phase des Ausgangssignals der zweiten Abtastmittel (12).

5. Entzerrer nach Anspruch 4, wobei die Phasenabgleichmittel umfassen:
- Eine Sample-and-Hold-Schaltung (14), wobei die Sample-and-Hold-Schaltung das Ausgangssignal der ersten Abtastmittel (11) empfängt; und
- eine Sample-and-Hold-Schaltung (15), wobei die Sample-and-Hold-Schaltung (15) das Ausgangssignal der zweiten Abtastmittel (12) empfängt;
wobei beide Sample-and-Hold-Schaltungen (14, 15) für das Abtasten zum selben Zeitpunkt konfiguriert sind.

6. Entzerrer nach Anspruch 1, wobei die Kombinationsmittel umfassen:
- Einen ersten Knoten (16), welcher Abtastwerte von geraden Symbolen (1) empfängt;
- einen zweiten Knoten (17), welcher Abtastwerte von ungeraden Symbolen (2) empfängt;
- ein erstes Verzögerungselement (18) mit einer Verzögerung von zwei Symbolen des elektrischen Signals, dessen Eingang an den ersten Knoten (16) angeschlossen ist;
- ein zweites Verzögerungselement (19) mit einer Verzögerung von zwei Symbolen des elektrischen Signals, dessen Eingang an den zweiten Knoten (17) angeschlossen ist;
- Mittel (20, 21, 22, 23, 24) zum gewichteten Kombinieren
- eines Abtastwertes von dem ersten Knoten (16),
- eines Abtastwertes von dem zweiten Knoten (17), und
- eines Abtastwertes vom Ausgang des ersten Verzögerungselements (18);
und
- Mittel (30, 31, 32, 33, 34) zum gewichteten Kombinieren
- eines Abtastwertes von dem zweiten Knoten (17),
- eines Abtastwertes vom Ausgang des ersten Verzögerungselements (18), und
- eines Abtastwertes vom Ausgang des zweiten Verzögerungselements (19).

7. Entzerrer nach Anspruch 2, wobei:
- Die ersten Abtastmittel (11) dafür konfiguriert sind, die geraden Bits (1) im Wesentlichen bei maximaler Augenöffnung abzutasten, und
- die zweiten Abtastmittel (2) dafür konfiguriert sind, die ungeraden Bits (2) im Wesentlichen bei maximaler Augenöffnung abzutasten.

8. Entzerrer nach Anspruch 1, weiterhin umfassend:
- Steuermittel zum Steuern von Gewichten in den Kombinationsmitteln und/oder zum Steuern der Abtastphasen der ersten (11) und zweiten (12) Abtastmittel, wobei die Steuermittel dafür konfiguriert sind, mindestens einen der folgenden Algorithmen auszuführen: Einen LMS-Algorithmus, einen auf einem Augenmonitor basierenden Algorithmus, und einen auf Zählfehlern basierenden Algorithmus.

9. Entzerrer nach Anspruch 1, wobei die Abtastphase der ersten Abtastmittel (11) unabhängig von der Abtastphase der zweiten Abtastmittel (12) steuerbar ist.

10. Entzerrer nach Anspruch 1, wobei Schaltungselemente (18, 19, 20, 21, 22, 23, 24, 30, 31, 32, 33, 34, 14, 15) des Entzerrers stromabwärts der ersten (11) und zweiten (12) Abtastmittel bei der Hälfte der Symbolrate oder weniger betrieben werden.

11. Entzerrer nach Anspruch 2, wobei der Entzerrer für einen Apol-RZ-DPSK-Empfänger mit einem Verzögerungsleitungs-Interferometer mit Zwei-Bit-Verzögerung bestimmt ist.

12. Empfänger für den Empfang eines optischen Signals in einem Wechselpolarisationsmodulationsformat, wobei der Empfänger umfasst:
- Mittel zum Erzeugen eines amplitudenmodulierten elektrischen Signals aus dem empfangenen optischen Signal, wobei das elektrische Signal eine Folge von Symbolen, aufgeteilt in abwechselnd gerade und ungerade Symbole, umfasst; und
- einen Entzerrer gemäß Anspruch 1, wobei der Entzerrer für die Entzerrung des amplitudenmodulierten elektrischen Signals bestimmt ist.

13. Empfänger nach Anspruch 12, wobei:
- Der Empfänger ein Apol-RZ-DPSK-Empfänger ist, und
- die Mittel zum Erzeugen eines amplitudenmodulierten elektrischen Signals umfassen:
- Ein Verzögerungsleitungs-Interferometer mit Zwei-Bit-Verzögerung; und
- Mittel zum Umwandeln eines optischen Signals in ein elektrisches Signal.

14. Verfahren zum Entzerren eines von einem empfangenen optischen Signal in einem Wechselpolarisationsmodulationsformat abgeleiteten elektrischen Signals, wobei das elektrische Signal eine Folge von Symbolen, aufgeteilt in abwechselnd gerade (1) und ungerade (2) Symbole, umfasst, wobei das Verfahren die folgenden Schritte umfasst:
- An ersten Abtastmitteln (11), Abtasten von geraden Symbolen (1) des elektrischen Signals, mit einer Abtastrate, welche die Hälfte der Symbolrate des elektrischen Signals beträgt;
- an zweiten Abtastmittel (12), Abtasten von ungeraden Symbolen (2) des elektrischen Signals, mit einer Abtastrate, welche die Hälfte der Symbolrate des elektrischen Signals beträgt;
- stromabwärts der ersten (11) und zweiten (12) Abtastmittel, gewichtetes Kombinieren eines Abtastwertes eines geraden Symbols (2) und zweier Abtastwerte von zwei ungeraden Symbolen (2), die mit dem geraden Symbol benachbart sind, um einen entzerrten Strom von geraden Symbolen zu erzeugen; und
- stromabwärts der ersten (11) und zweiten (12) Abtastmittel, gewichtetes Kombinieren eines Abtastwertes eines ungeraden Symbols (2) und zweier Abtastwerte von zwei geraden Symbolen (1), die mit dem ungeraden Symbol benachbart sind, um einen entzerrten Strom von ungeraden Symbolen zu erzeugen.

## Revendications

1. Égaliseur électrique pour égaliser un signal électrique à modulation d'amplitude dérivé d'un signal optique reçu dans un format de modulation à polarisation alternée, le signal électrique comprenant une séquence de symboles subdivisés en symboles pairs (1) et impairs (2) alternés, l'égaliseur comprenant :
- premiers moyens d'échantillonnage (11), les premiers moyens d'échantillonnage échantillonnant les symboles pairs (1) du signal électrique, la vitesse d'échantillonnage des premiers moyens d'échantillonnage (11) étant la moitié du débit de symboles du signal électrique ;
- deuxièmes moyens d'échantillonnage (12), les deuxièmes moyens d'échantillonnage échantillonnant les symboles impairs (2) du signal électrique, la vitesse d'échantillonnage des deuxièmes moyens d'échantillonnage (12) étant la moitié du débit de symboles du signal électrique ; et
- moyens de combinaison (18, 19, 20, 21, 22, 23, 24, 30, 31, 32, 33, 34) en aval des premiers (11) et deuxièmes (12) moyens d'échantillonnage, les moyens de combinaison effectuant une combinaison pondérée d'un premier groupe d'échantillons de symboles adjacents du signal électrique et effectuant une combinaison pondérée d'un deuxième groupe d'échantillons de symboles adjacents du signal électrique ; dans lequel les moyens de combinaison (18, 19, 20, 21, 22, 23, 24, 30, 31, 32, 33, 34) sont configurés pour effectuer une combinaison pondérée d'un échantillon d'un symbole pair (1) et de deux échantillons de deux symboles impairs (2) adjacents du symbole pair afin de générer un flux égalisé de symboles pairs, et pour effectuer une combinaison pondérée d'un échantillon d'un symbole impair (2) et de deux échantillons de deux symboles pairs (1) adjacents du symbole impair, afin de générer un flux égalisé de symboles impairs.

2. Égaliseur selon la revendication 1, dans lequel chaque symbole (1, 2) est un bit.

3. Égaliseur selon la revendication 1, dans lequel les premiers moyens d'échantillonnage sont un premier échantillonneur-bloqueur (11) et les deuxièmes moyens d'échantillonnage sont un deuxième échantillonneur-bloqueur (12).

4. Égaliseur selon la revendication 1, l'égaliseur comprenant en outre :
- moyens d'alignement de phase (14, 15) pour aligner la phase du signal de sortie des premiers moyens d'échantillonnage (11) avec la phase du signal de sortie des deuxièmes moyens d'échantillonnage (12).

5. Égaliseur selon la revendication 4, dans lequel les moyens d'alignement de phase comprennent :
- échantillonneur-bloqueur (14), l'échantillonneur-bloqueur recevant le signal de sortie des premiers moyens d'échantillonnage (11) ; et
- échantillonneur-bloqueur (15), l'échantillonneur-bloqueur (15) recevant le signal de sortie des deuxièmes moyens d'échantillonnage (12),
dans lequel les deux échantillonneurs-bloqueurs (14, 15) sont configurés pour échantillonner au même moment.

6. Égaliseur selon la revendication 1, dans lequel les moyens de combinaison comprennent :
- premier noeud (16) recevant des échantillons de symboles pairs (1) ;
- deuxième noeud (17) recevant des échantillons de symboles impairs (2) ;
- premier élément de retard (18) présentant un retard de deux symboles du signal électrique, dont l'entrée est connectée au premier noeud (16) ;
- deuxième élément de retard (19) présentant un retard de deux symboles du signal électrique, dont l'entrée est connectée au deuxième noeud (17) ;
- moyens (20, 21, 22, 23, 24) pour effectuer une combinaison pondérée
- d'un échantillon du premier noeud (16),
- d'un échantillon du deuxième noeud (17), et
- d'un échantillon de la sortie du premier élément de retard (18) ;
et
- des moyens (30, 31, 32, 33, 34) pour effectuer une combinaison pondérée
- d'un échantillon du deuxième noeud (17),
- d'un échantillon de la sortie du premier élément de retard (18), et
- d'un échantillon de la sortie du deuxième élément de retard (19).

7. Égaliseur selon la revendication 2, dans lequel
- les premiers moyens d'échantillonnage (11) sont configurés pour échantillonner les bits pairs (1) essentiellement à l'ouverture maximale de l'oeil, et
- les deuxièmes moyens d'échantillonnage (12) sont configurés pour échantillonner les bits impairs (2) essentiellement à l'ouverture maximale de l'oeil.

8. Égaliseur selon la revendication 1, comprenant en outre :
- moyens de contrôle pour contrôler des poids dans les moyens de combinaison et/ou pour contrôler les phases d'échantillonnage des premiers (11) et deuxièmes (12) moyens d'échantillonnage, dans lequel les moyens de contrôle sont configurés pour exécuter au moins un des algorithmes suivants : un algorithme LMS, un algorithme basé sur un dispositif de surveillance oculaire, et un algorithme basé sur des erreurs de comptage.

9. Égaliseur selon la revendication 1, dans lequel la phase d'échantillonnage des premiers moyens d'échantillonnage (11) peut être contrôlée indépendamment de la phase d'échantillonnage des deuxièmes moyens d'échantillonnage (12).

10. Égaliseur selon la revendication 1, dans lequel des éléments de circuit (18, 19, 20, 21, 22, 23, 24, 30, 31, 32, 33, 34, 14, 15) de l'égaliseur en aval des premiers (11) et deuxièmes (12) moyens d'échantillonnage fonctionnent au maximum à la moitié du débit de symboles.

11. Égaliseur selon la revendication 2, dans lequel l'égaliseur est pour un récepteur Apol-RZ-DPSK comprenant un interféromètre à lignes à retard avec un retard de deux bits.

12. Récepteur pour recevoir un signal optique dans un format de modulation à polarisation alternée, le récepteur comprenant :
- moyens pour générer un signal électrique à modulation d'amplitude à partir du signal optique reçu, le signal électrique comprenant une séquence de symboles subdivisés en symboles pairs et impairs alternés ; et
- égaliseur selon la revendication 1, l'égaliseur pour égaliser le signal électrique à modulation d'amplitude.

13. Récepteur selon la revendication 12, dans lequel
- le récepteur est un récepteur Apol-RZ-DPSK, et
- les moyens pour générer un signal électrique à modulation d'amplitude comprennent :
- interféromètre à lignes à retard avec un retard de deux bits ; et
- moyens de conversion optique-électrique.

14. Procédé pour égaliser un signal électrique dérivé d'un signal optique reçu dans un format de modulation à polarisation alternée, le signal électrique comprenant une séquence de symboles subdivisés en symboles pairs (1) et impairs (2) alternés, le procédé comprenant les étapes suivantes :
- au niveau des premiers moyens d'échantillonnage (11), échantillonner des symboles pairs (1) du signal électrique avec une vitesse d'échantillonnage qui est la moitié du débit de symboles du signal électrique ;
- au niveau des deuxièmes moyens d'échantillonnage (12), échantillonner des symboles impairs (2) du signal électrique avec une vitesse d'échantillonnage qui est la moitié du débit de symboles du signal électrique ;
- en aval des premiers (11) et deuxièmes (12) moyens d'échantillonnage, effectuer une combinaison pondérée d'un échantillon d'un symbole pair (1) et deux échantillons de deux symboles impairs (2) adjacents du symbole pair afin de générer un flux égalisé de symboles pairs ; et
- en aval des premiers (11) et deuxièmes (12) moyens d'échantillonnage, effectuer une combinaison pondérée d'un échantillon d'un symbole impair (2) et deux échantillons de deux symboles pairs (1) adjacents du symbole impair afin de générer un flux égalisé de symboles impairs.
